# EUROPEAN PATENT SPECIFICATION

(11) **EP 0 465 396 B1**
(45) Date of publication and mention of the grant of the patent: **14.09.1994**
(21) Application number: 91500068.1
(22) Date of filing: 21.06.1991
(51) Int. Cl.: A47J 31/58

(54) **Safety closure for steam pressure coffee machine water reservoirs**
Sicherheitsverschluss für einen Wasserbehälter einer Dampfdruck-Kaffeemaschine
Fermeture de sécurité pour un réservoir d'eau de cafetières à vapeur

(30) Priority: 22.06.1990 ES 9001740
(43) Date of publication of application: 08.01.1992
(73) Proprietor: OFICINA DE INVESTIGACION AGRUPADA, S.A., 20600 Eibar (Guipuzcoa) (ES)
(72) Inventor: Azpitarte Bolivar, Domingo, Durango, Vizcaya (ES)
(74) Representative: Carpintero Lopez, Francisco

(56) References cited:
- CH-A- 384 164
- ES-A- 540 281
- GB-A- 779 617
- GB-A- 793 944

## Description

### OBJECT OF THE INVENTION

The present invention relates to a safety closure specifically designed for water reservoirs used to provide coffee machines with pressurized Steam.

### BACKGROUND TO THE INVENTION

It is a known fact that steam pressure coffee machines have a water reservoir for obtaining steam which is duly connected in industrial coffee machines to the general water supply system but that must be filled with water manually in household coffee machines, before making coffee, through the relevant mouth leading into such reservoir.

More specifically, when opening the same for refilling with water, the procedure is in principle inconvenient since the reservoir's safety closure systems are currently screw stoppers which, on removal with the coffee machine under operating pressure, might permit a jet of water steam to spurt out, with the risk this represents of the user being burnt.

In an attempt to overcome this problem, the applicant hereof filed patent of invention 540,281 and certificate of addition thereof 8700605, such describing a safety mechanism that eliminates the above-mentioned risk. More specifically, the solution adopted to such end comprises providing the water reservoir with a screw stopper, the periphery of the mouth of such stopper having a plurality of recesses which can house a rod that tends to enter into any of the same urged by the actual pressure inside the reservoir, so that until such pressure falls under a given security level, which is not hazardous, the stopper cannot be removed, and hence the reservoir cannot be opened.

However, this solution has a problem that is essentially twofold, one being that it is inconvenient to fill the reservoir, for the said stopper must be unscrewed and then screwed again, this involving two slow procedures with the first being frequently more difficult because same is excessively tight, and the other being that failure of the stopper's blocking rod would leave the coffee machine's water reservoir without protection in the above sense, this being rather risky.

### DESCRIPTION OF THE INVENTION

The safety closure subject of the invention according to the main claim fully solves this twofold problem, allowing the reservoir to be filled very quickly and simply, and moreover eliminating the aforesaid risks, for in the hypothetical event of the mechanism failing, the reservoir would not close but could at no event be opened under pressure.

More specifically and in order to achieve the above, the safety closure subject hereof involves providing the mouth of the reservoir with a rather wide one-way valve that urges towards the close position by a spring outside the same, which valve is assisted by a hand-operating element for the valve opening element, that can be embodied at the own spring, this assembly being housed in a neck extending from the mouth of the reservoir, either as one piece or with the collaboration of a, complementary piece forming a sort of funnel that makes it easier to pour the water and is preferably flush with the body of the coffee machine, and that will in turn be sealed by a small cover that in fact embellishes and rounds off the appearance of the apparatus rather than being a sealing cover as such.

As aforesaid, and in a preferred embodiment of the invention, the spring that urges to close the one-way valve is embodied by the actual manual valve opening element to which end such spring consists in a band that diametrically crosses the "funnel", one of its ends being attached to such funnel and the middle area thereof having a hole through which a rod connecting such band to the one-way valve stopper passes, so that upon manual operation of the free end of the band the said stopper moves to the open position merely by gravity, what will obviously only occur when there is no pressure inside the water reservoir or such pressure is sufficiently small in order not to be able to keep the stopper closed, against its own weight, under which circumstance opening of the reservoir will represent no risk to the user of the coffee machine.

According to another characteristic of the invention, the said rod joined to the stopper can be urged permanently through its head, by means of a non-resilient arm that substitutes the band of the before mentiones case which arm swings against the force exerted by a spring duly attached thereto.

It also exists the possibility that urging the spring to close the valve to be coaxially mounted on the own rod, supported by the guide bush provided to such end and also by a push-button connected to the free end of the rod, so that if the said spring is pressed manually energized the valve is opened, but only whenever there is no pressure inside the reservoir and, hence, such pressure does not exert a force upon the valve stopper in opposition to the manual operation on the push-button.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:
Figure 1.- Is a partial side elevation close view of a steam pressure coffee machine fitted with a safety closure for its water reservoir, in accordance with the object hereof.
Figure 2.- Is a view similar to that of figure 1, wherein the element recoiling the stopper to the closed position slightly modified in respect of the previous figure.
Figure 3.- Is yet another view similar to the above figures, with the valve stopper recoil spring with a new modification.
Figure 4.- Is, finally, a plan view of the safety closure of the above figure without the funnel.

### PREFERRED EMBODIMENT OF THE INVENTION

In light of these figures, it can be seen that the safety closure subject hereof comprises providing the top of the coffee machine's water reservoir (1) with a one-way valve consisting of a rather wide hole (2) with an ledge (3) supporting a disk-shaped stopper (4), having a perimetric joint (5), which stopper (4) is coaxially joined with a rod (6), that is preferably screwed to it, pointing outwards and duly guided by a bush (7) coaxial with the actual hole (2) and fixed to the mouth thereof by means of suitably spaced radial arms (8).

The body of the reservoir (1) extends beyond the one-way valve (2-4) into a neck (9) which houses a conventional pressure-relief valve (10) and that through its mouth it receives a complementary funnel (11) designed to make filling of the reservoir (1) easier by pouring water into the same.

In any event, the one-way valve stopper (4), that urges to be closed by the steam pressure in the reservoir (1), is also always urging towards such closed position, even if there is no pressure in such reservoir (1), due to a spring effect.

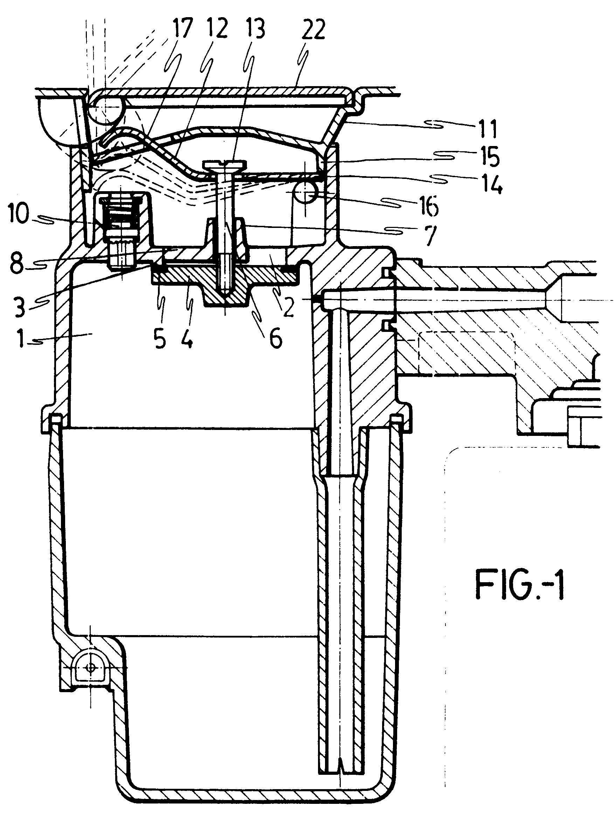

This spring, in accordance with the embodiment of figure 1, consists of a band (12) traversed by the rod (6) which it urges through its head (13), in which event of the said rod (6) can be materialized in a screw, as shown in the said figure 1, one of the ends (14) of the band (12) being fixed to the reservoir body, for instance between the funnel edge (15) and a transverse pin (16), its free end having a curvo-convex sector (17) making it easier to tighten the same manually for the valve to open when the water is poured in, thereby for the stopper (4) to take up the position of figure 1 in which the band (12) would be at its lower deformation limit, as shown by the dotted line of the said figure, in which position the stopper (4) moves down, i.e., it opens merely by gravity, when there is no pressure inside the reservoir (1) and, hence, when opening represents no risk.

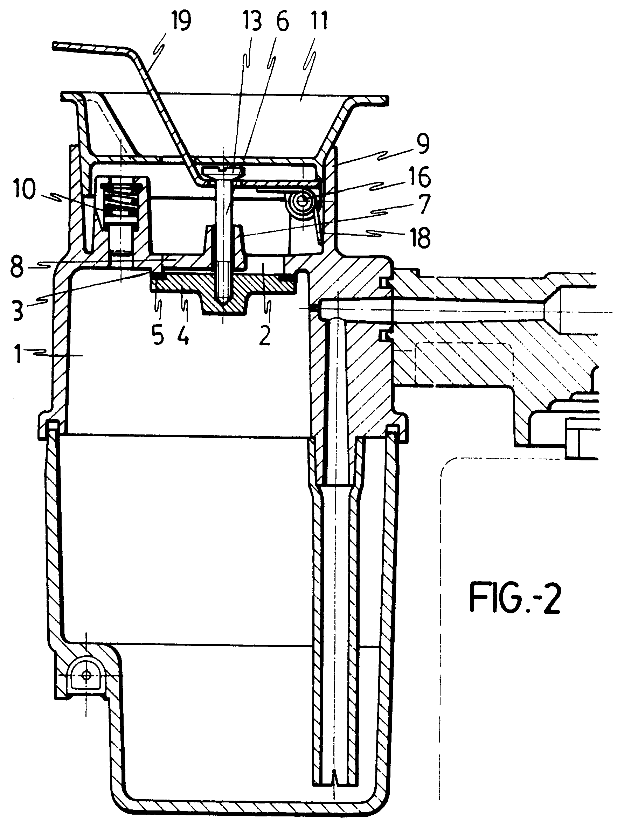

Nevertheless, and in accordance with figure 2, the spring (18) can be mounted upon the pin (16) to act on a stiff arm (19), equivalent to the band (12) of the previous case, but without the elastic properties thereof, that are in this case provided by the said spring (18).

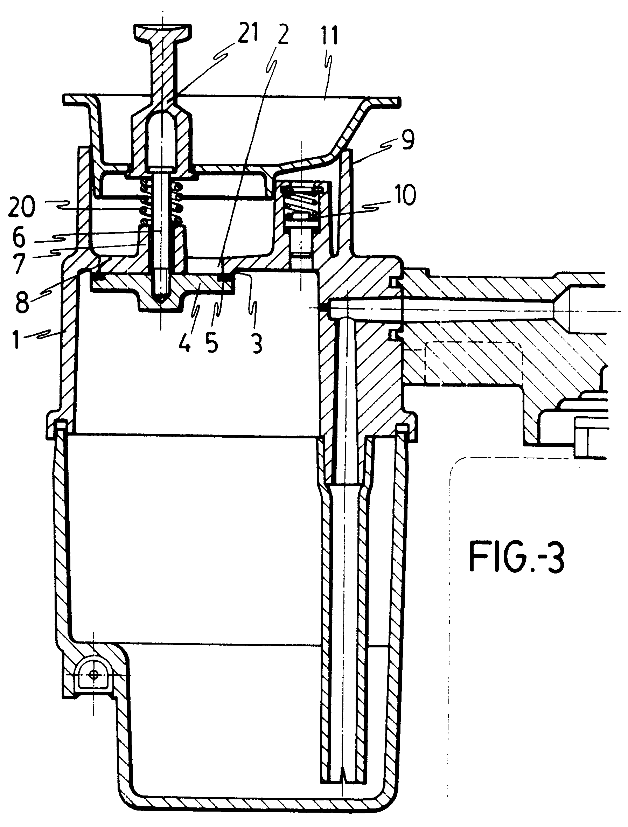

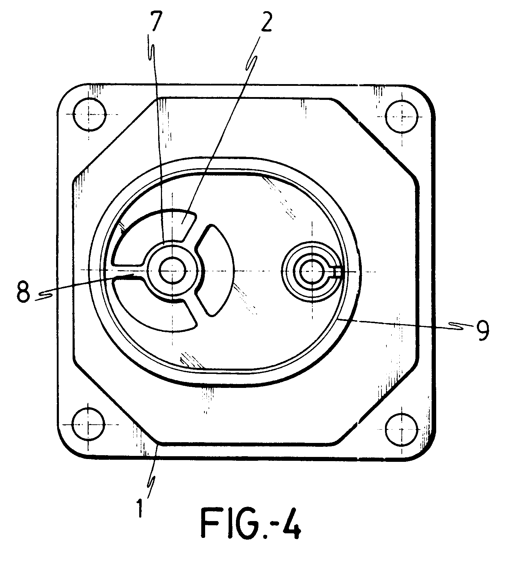

Finally, and in accordance with figures 3 and 4, it is possible for the spring (20) to be coaxially mounted on the actual rod (6), one of its ends being supported by the front of the guide bush (7) and the other by a head or push-button (21) for the stopper (4) to be driven by hand, thereby for such spring (20), as can be seen clearly in the said figure 3, to tend to keep the stopper (4) closed, nevertheless allowing the same to open or move down when the push-button (21) is manually energized and when there is no pressure inside the reservoir (1) opposing the said manual pressure, preventing the operation.

The funnel (11) can be kept open, as in figures 2 and 3, or can be closed with an auxiliary cover (22), that rounds off the external appearance of the coffee machine body as a whole, but that has no real closure function, as aforesaid.

It is in any event a fact that opening takes place extremely quickly and simply since it is sufficient to act upon the band (12), the arm (19) or the push-button (21) for the coffee machine's reservoir to be very easily filled with the necessary amount of water because of the provision of the aforesaid funnel (11).

## Claims

1. Safety closure for steam pressure coffee machine water reservoirs (1), essentially characterised by providing the top of such reservoir, besides the conventional relief valve, with a one-way valve having a considerably wide hole (2) with a disk-shaped stopper (4) to which is joined a coaxial rod (6) that projects to the outside, i.e., upwards and that is loosely held within a guide bush (7) that is also coaxial with the valve hole the said bush is rigidly connected to the periphery of such hole through radial arms (8), such stopper (4) moreover being urged towards the close position, the urging action deriving both from the water reservoir pressure, whenever such pressure actually exists, and from a spring (12) that drives the said rod and said stopper towards the outside, the said spring being mannually energized during the filing phase.

2. Safety closure for steam pressure coffee machine water reservoirs, as in claim 1, characterised in that the top free end of the rod (6) joined to the one-way valve stopper (4) has at its upper and free end an expanded head (13) that makes butt over the upper surface of a band (12) that has a hole through its middle for such rod (6) to traverse, one of the ends (14) of which band is stiffly joined to a neck that extends from the top of the water reservoir, and by its other free end defining the area of manual operation of the same for the valve opening.

3. Safety closure for steam pressure coffee machine water reservoirs, as in previous claims, characterised in that the rod (6) joined to the stopper traverses a stiff arm, (19) that replaces the aforesaid band, one of the ends of which arm is also constitutes the area for operating the valve opening, but that by its other end is joined to the neck of the reservoir (9) in articulated manner and assisted by a spring (18) that urges to swing the said arm (19) towards the closed position of the one-way valve.

4. Safety closure for steam pressure coffee machine water reservoirs, as in claim 1, characterised in that coaxially mounted on the rod (6) joined to the valve stopper is a helical spring (20), the lower end of which spring (20) is supported by the said rod's (6) guide bush, (7) while its upper end is supported by a head or push-button (21) duly associated to the upper end of the said rod, which is displaceable downwards, upon pressing the push-button by hand in opposition to the said spring, (20) thereby opening the one-way valve.

5. Safety closure for steam pressure coffee machine water reservoirs, as in previous claims, characterised in that coupled to the mouth of the neck with which the water reservoir is provided, above the one-way valve, is an auxiliary element consisting in a funnel (11) that makes it easier to pour the water into the reservoir (1), the means for opening the valve being provided within the same, a cover (22) that can be coupled to the mouth thereof being optionally provided to round off the external appearance of the apparatus.

## Patentansprüche

1. Sicherheitsverschluss für einen Wasserbehälter (1) einer Dampfdruckkaffeemaschine, hauptsächlich dadurch gekennzeichnet, dass im oberen Bereich des genannten Behälters, neben dem üblichen Sicherheitsventil, ein Einwegeventil vorgesehen ist, das eine ziemlich breite Öffnung (2) mit einem scheibenförmigen Stopfen (4) aufweist, mit dem koaxial eine nach aussen, d.h. nach oben gerichtete Stange (6) verbunden ist, die lose innerhalb einer zur Ventilöffnung ebenfalls koaxialen Führungsbuchse (7) gehalten wird, die über radiale Arme (8) starr mit dem Umfang dieser Öffnung verbunden ist, wobei der Stopfen (4) sowohl durch die Schubkraft des im Wasserbehälter vorhandenen Drucks, soweit dieser Druck tatsächlich besteht, als auch durch die Kraft einer Feder (12), welche die genannte Stange und den Stopfen nach aussen drückt, in die Verschlusstellung bewegt und die Feder während der Füllphase von Hand betätigt wird.

2. Sicherheitsverschluss für einen Wasserbehälter einer Dampfdruckkaffeemaschine, nach Anspruch 1 dadurch gekennzeichnet, dass das obere freie Ende der mit dem Stopfen (4) des Einwegevcentils verbundenen Stange (6) einen erweiterten Kopf (13) aufweist, der sich gegen die obere Fläche eines Bandes (12) abstützt, das in der Mitte eine Öffnung besitzt, durch welche die Stange (6) ragt, wobei das eine Ende (14) des erwähnten Bandes starr an einem Hals befestigt wird, der vom oberen Bereich des Wasserbehälters ausgeht, und das andere freie Ende einen Bereich für die Handbetätigung zum Öffnen des Ventils bildet.

3. Sicherheitsverschluss für einen Wasserbehälter einer Dampfdruckkaffeemaschine, nach den vorangehenden Ansprüchen dadurch gekennzeichnet, dass sich die mit dem Stopfen verbundene Stange (6) durch einen starren Arm (19) erstreckt, der das vorstehend genannte Band ersetzt, wobei das eine Ende dieses Armes ebenfalls einen Bereich zur Betätigung der Ventiloffnung bildet, während das andere Ende gelenkig am Behälterhals (9) befestigt und von einer Feder unterstützt wird, durch deren Wirkung der Arm (19) in Richtung der geschlossenen Stellung des Einwegeventils geschoben wird.

4. Sicherheitsverschluss für einen Wasserbehälter einer Dampfdruckkaffeemaschine, nach Anspruch 1 dadurch gekennzeichnet, dass sich koaxial auf der mit dem Ventilstopfen verbundenen Stange (6) eine Schraubenfeder (20) befindet, deren unteres Ende von einer Führungsbuchse (7) dieser Stange (6) gehalten wird, während sich das obere Ende auf einem mit dem oberen Ende der Stange verbundenen Kopf oder Taster (21) abstützt und nach unten gleitet, wenn der Taster von Hand gegen die Kraft der genannten Feder (20) betätigt wird, womit das Einwegeventil öffnet.

5. Sicherheitsverschluss für einen Wasserbehälter einer Dampfdruckkaffeemaschine, nach den vorangehenden Ansprüchen dadurch gekennzeichnet, dass an der Öffnung des Halses des Wasserbehälters, über dem Einwegeventil, eine Hilfsvorrichtung angebracht wird, die aus einem Trichter (11) besteht, der die Zugabe von Wasser in den Behälter (1) erleichtert und in dessen Innern Mittel zum Öffnen des Ventils vorgesehen sind, während an der Öffnung nach Wahl ein Deckel (22) angeordnet werden kann, der das äussere Aussehen des Geräts abrundet.

## Revendications

1. Fermeture de sécurité pour un réservoir (1) d'eau de cafetières à vapeur, essentiellement caractérisée par le fait qu'elle fournit à la partie supériure de ce réservoir, outre la soupape de sûreté traditionnelle, une soupape à passage unique, qui a un trou fort large (2), avec un bouchon en forme de disque (4) auquel est reliée une tige coaxiale (6), qui se projette vers l'extérieur, c'est-à-dire vers le haut, et qui est soutenue de façon souple à l'intérieur d'une baque pilote (7), laquelle est aussi coaxiale au trou de la soupape, cette bague étant connectée de façon rigide avec la prériphérie de ce trou au moyen de bras radiaux (8), ledit bouchon (4) étant, de plus, poussé vers la position fermée, cette poussée decoulant autant de la pression du réservoir d'eau, quand ladite pression existe réellement, que de la force d'un ressort (12) qui meut cette tige et ce bouchon vers l'extérieur, le ressort en question étant actionné à la main durant la phase de remplissage.

2. Fermeture de sécurité pour un réservoir d'eau de cafetières à vapeur, selon la revendication 1, caractérisée par le fait que l'extrémité supérieure libre de la tige (6), reliée au bouchon de la soupape à passage unique (4), a une tête élargie (13), qui s'appuie contre la surface supérieure d'une bande (12), qui présente un trou en son milieu, pour être traversé par ladite tige (6), une des extrémités (14) de cette bande étant unie de façon rigide à un goulot, qui s'étend depuis la partie supérieure du réservoir d'eau, tandis que son autre extrémité libre définit la zone de son actionnement manuel pour l'ouverture de la soupape.

3. Fermeture de sécurité pour un réservoir d'eau de cafetières à vapeur, selon les revendications précédentes, caractérisée par le fait que la tige (6) jointe au bouchon, traverse un bras rigide (19), qui remplace la bande citée, une des extrémités de ce bras constituant aussi la zone pour actionner l'ouverture de la soupape, mais qui, par son autre extrémité est rattaché au goulot du réservoir (9) de façon articulée, à l'aide d'un ressort qui pousse pour faire osciller ledit bras (19) vers la position fermée de la soupape à passage unique.

4. Fermeture de sécurité pour un réservoir d'eau de cafetières à vapeur, selon la revendication 1, caractérisée par le fait qu'un ressort hélicoïdal (20) est monté coaxialement sur la tige (6), reliée au bouchon de la soupape, l'extrémité inférieure de ce ressort (20) étant supportée par la bague pilote (7) de cette tige (6), tandis que son extrémité supérieure est supportée par une tête ou bouton-poussoir (21), dûment associé à l'extrémité supérieure de ladite tige et qui se déplace vers le bas, lorsqu'on pousse à la main le bouton-poussoir en opposition à la force du ressort en question (20), si bien que s'ouvre ainsi la soupape à passage unique.

5. Fermeture de sécurité pour un réservoir d'eau de cafetières à vapeur, selon les revendications précédentes, caractérisée par le fait qu'accouplé avec l'embouchure du goulot du réservoir d'eau, au-dessus de la soupape à passage unique, se trouve un élément auxiliaire, consistant en un entonnoir (11), qui facilite l'ajoute d'eau au réservoir (1), dans lequel on plaçe les moyens pour ouvrir la soupape, ainsi qu'à titre d'option, un couvercle (22), qui peut être accouplé à son embouchure pour arrondir l'aspect extérieur de l'appareil.
